# EUROPEAN PATENT SPECIFICATION

(11) **EP 1 597 464 B1**
(45) Date of publication and mention of the grant of the patent: **17.12.2014**
(21) Application number: 04714979.4
(22) Date of filing: 26.02.2004
(51) Int. Cl.: F02C 3/16

(54) **MICRO REACTION TURBINE WITH AN INTEGRATED COMBUSTION CHAMBER AND ROTOR MODULE AND METHOD OF OPERATION**
MIKROREAKTIONSTURBINE MIT INTEGRIERTEM BRENNKAMMER-ROTOR-MODUL SOWIE VERFAHREN ZUM BETRIEB
MICROTURBINE A REACTION A MODULE INTEGRE CONSTITUE D'UNE CHAMBRE DE COMBUSTION ET D'UN ROTOR ET PROCÉDÉ D'OPERATION

(30) Priority: 28.02.2003 NL 1022803
(43) Date of publication of application: 23.11.2005
(73) Proprietor: Micro Turbine Technology B.V., 4811 DT Breda (NL)
(72) Inventor: WITTEVEEN, Gustaaf, Jan, NL-6584 AS Molenhoek (NL)
(74) Representative: Verhees, Godefridus Josephus Maria
(86) International application number: PCT/NL2004/000144
(87) International publication number: WO 2004/076835

(56) References cited:
- WO-A-00/39440
- DE-A- 4 310 508
- DE-A- 4 441 730
- FR-A- 1 185 945
- FR-A- 2 680 385

## Description

The invention relates to an apparatus for generating mechanical work (power) and thermal energy (heat) from a fuel, on a small power scale (mechanical power order of magnitude 10 W - 150 kW).

The prior art has disclosed turbines of the type described above. In a gas turbine (Brayton cycle), a gas is compressed in a compressor, heated in a combustion chamber (with the result that the volume of the gas increases) and then expanded in a turbine. The increased volume of gas during expansion results in more expansion work being supplied than the compression work demanded, which results in a net gain in power. In a steam turbine cycle (Rankine cycle), a liquid is pressurized using a pump, evaporated in a boiler and then expanded in a turbine. The difference between compression work and expansion work means that in this case too there is a net power gain, but the phase difference (liquid/gaseous) means that the difference between compression and expansion work is much greater than in a gas turbine cycle.

In both cases, work is delivered in a rotating turbo machine as a result of kinetic energy (motion energy) and potential energy (pressure) of gases being converted into mechanical energy. This principle can be described using an integral angular momentum balance.

The gas (or vapor) exerts forces, which are associated with the local pressure and any changing velocity of the flow medium, on the walls of flow passages (the blades) of the rotating rotor.

In general, at least three loss mechanisms arise during compression and expansion:
1. Leakage of gas (or vapor) through gaps between the moving rotor surfaces and the stationary casing.
2. Impact losses at the transition in the flow from one flow passage to another flow passage.
3. Frictional losses (at passage and rotor walls and internally in the flowing medium).

Leakage losses are associated with gap widths. In view of the finite absolute dimensional accuracy with which moving seals can be designed (also in view of thermal expansion), sealing problems are significant in particular in the case of small overall dimensions of the compressor and turbine rotor.

In addition, collision losses are proportional to the thickness of the partitions between the flow passages (the blade thickness), which likewise become relatively great if the rotor is of a small overall size.

Finally, velocities and the wall surface area increase in relation to the through-flow surface areas in the case of small dimensions.

WO 00/39440 describes a reaction turbine comprising an inlet located in the vicinity of the center axis of the rotation, this inlet actually being divided into a number of inlet passages connected to a number of individual combustion spaces, and outlet passages which extend to the circumference.

WO 90/01625 discloses a rotating combustion chamber, a boundary of which is formed by a water jacket which forms the circumferential boundary through centrifugal effects.

DE 441730 has disclosed a device without compressor. US 846971 (1906) discloses a multi-stage turbo pump. US 3226085 describes a rotary turbine having a stationary part and a rotating part.

In view of the above, the object of the present invention is to provide an apparatus of the type described above, in which the losses (which are relatively high in particular in the case of small dimensions) are eliminated or greatly reduced. According to the present invention, this object is achieved by the properties of claim 1. According to the present invention, an improvement over the prior art is obtained by:
1. Carrying out the compression, heating and expansion in a single passage, which is closed off with the exception of inlet and outlet openings and does not have to be sealed with respect to the turbine casing.
2. Connecting a compression passage without any bladed transition to a combustion chamber, which in turn is connected without any bladed transition to an expansion passage.
3. Providing the rotor with a premixed gas/air mixture, which is burnt in the rotor.
4. Where possible (in particular downstream of the compressor), keeping the velocities relatively low, with the result that frictional losses are reduced.
5. Running in hot gas with a relatively low viscosity.

On account of the fact that the gas exerts force on the rotor through a combination of momentum and compressive forces, the turbine is in the category of reaction turbines.

The basic embodiment of the invention comprises an apparatus having the above characteristics (1-5), in which a gas/air mixture with a slight excess of air is sucked in, compressed in a compressor wheel, burnt in a combustion chamber which is fixably connected thereto and then expanded in an expansion wheel which is fixably connected thereto.

One characteristic feature of the basic embodiment of the invention is the slight excess of air in the gas/air mixture. The slight excess of air makes it possible to realize a high combustion temperature, which is of benefit to the conversion efficiency (Carnot efficiency).

A further characteristic feature is that the rotor rotates in the expanded combustion gas (which is still of a relatively high temperature), and consequently the wall friction is relatively low.

In conjunction with the above characteristic features, it should be noted here that the basic embodiment of the invention is a high-speed application of a rotating turbo machine. The intended rotational speed is over 50 000 revolutions per minute.

The compression ratio (the compressor final pressure in relation to the starting pressure) is of importance to the effectiveness of the present invention. In the embodiment with a single-stage centrifugal compressor, the pressure ratio and therefore the conversion efficiency is limited. In the present invention, there is provision for the use of a compressor with a plurality of stages, with the kinetic energy of the gas from one stage being recovered and converted into mechanical energy by the transfer momentum in the boundary layer flow to rotor disks. In this way, a compressor stage receives the static pressure supplied from the previous stage, and the kinetic energy of the gas is retained for delivering power.

On account of the fact that the entire rotor rotates at a high circumferential speed, good heat exchange is possible with the hot combustion gases around the rotor. In addition, heat can be exchanged with the casing of the rotor through radiation. These heat-exchanging properties of the rotor make the following particular embodiments possible.

First of all, the thermal energy which is still available in the combustion gases can be used to preheat the compressed gas/air mixture before the latter is burned in the combustion chamber. This recovery of residual heat is known as regeneration. This means that less fuel is required to attain a certain temperature from the combustion chamber, and the efficiency of the gas turbine increases.

A second option for heat exchange with the compressed gas/air mixture is cooling of the gas/air mixture, firstly by radiation from the rotor to the turbine casing, and secondly by cooling of the rotor using relatively cold intake air. By cooling the intake gas/air mixture, it is possible to realize a higher compression ratio, which is of benefit to the thermomechanical conversion efficiency.

A third embodiment, in which the good heat exchange of the rotor with an environment of this type is used is the heating of the medium in the rotor by means of an external heat source. This external heat source may be formed, for example, by a radiation burner or hot gases which are guided past the rotor. This allows the combustion to be carried out in a controlled manner and means that the medium in the rotor does not have to make the combustion itself possible. In this way, it is possible for a gas to be sucked in by the compressor and heated by the external source. It is also possible for a liquid rather than a gas to be sucked in by the rotor, pressurized in the rotor and then heated by the external source in such a manner that it is evaporated. The vapor which is formed can then be expanded in the expansion wheel. This results in a Rankine (steam) cycle. In a similar manner to in the gas turbine cycle, in this case too a regenerated action is possible by using heat from the expanded vapor to preheat the process medium prior to heating by the external heat source.

The invention also relates to a reaction turbine comprising a rotatably mounted turbine wheel with an inlet arranged in the vicinity of its center axis and an outlet arranged in the vicinity of the outer circumference, with a compressor arranged between the said inlet and the said outlet, the said compressor comprising a multistage compressor, each compression space comprising an inlet arranged in the vicinity of the center axis and an outlet arranged in the vicinity of the outer circumference of the turbine wheel, and with a connecting conduit arranged between the outlet of the first compressor stage and the inlet of the second compressor stage. This particular embodiment of the compressor may optionally be used in combination with a (downstream) combustion chamber. The particular embodiment of the combustion chamber described above is not essential to this variant of the compressor. After all, there are known reaction turbine designs which operate without a reaction chamber.

According to an advantageous embodiment of this staged compressor, the connecting conduit is delimited by the walls of the space of the first compressor stage and of the second compressor stage. This causes the gas to move to and fro in zigzag form.

This variant too can be used without the particular embodiment of the combustion chamber described above.

The invention also relates to a reaction turbine comprising a rotatably mounted turbine wheel with an inlet arranged in the vicinity of its center axis and an outlet arranged in the vicinity of the outer circumference, with a compressor and a combustion chamber arranged between the inlet and outlet. In this case, according to the invention, use is made of heat exchanger means, by means of which the heat from the gas which emerges is used to heat the gas which comes out of the compressor and is fed to the combustion chamber, with heat exchange being carried out directly, i.e. with the gas which flows out directly heating, via a heat exchanger, the stream of gas moving out of the compressor. The embodiment of the compressor or combustion chamber is not essential to this variant in which the heat exchange is applied directly.

The invention also relates to a combined heat and power system in which use is made of one of the reaction turbine embodiments described above in combination with an electric generator. The heat which is released is preferably used to heat a building.

The invention will be described in more detail on the basis of the appended figures, in which:
Fig. 1 shows a gas turbine in accordance with the basic embodiment;
Fig. 2 shows a gas turbine in accordance with the basic embodiment, with a multistage disk compressor;
Fig. 3 shows a gas turbine in accordance with the basic embodiment, in which regeneration of residual heat takes place;
Fig. 4 shows a gas turbine in accordance with the basic embodiment, in which cooling of compressed gas takes place;
Fig. 5 shows a gas turbine in accordance with the basic embodiment, in which external heating of gas takes place;
Fig. 6 shows a steam turbine in accordance with the basic embodiment of the gas turbine, with external combustion, integrated liquid pump, evaporator and expansion wheel;
Fig. 7 shows a steam turbine as shown in Figure 6, in which regeneration of residual heat takes place.

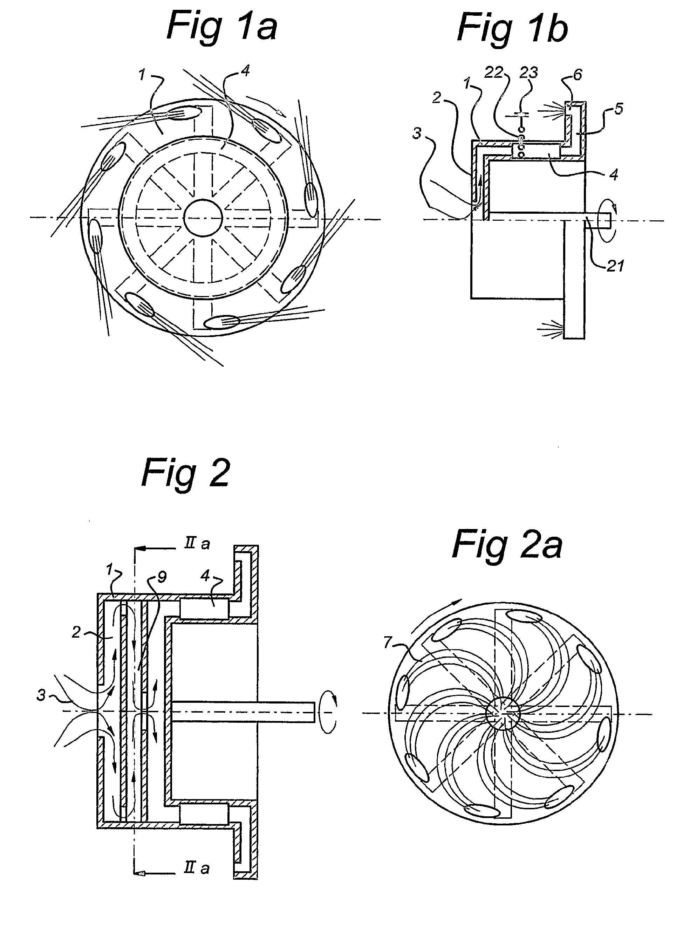

Figure 1 shows a rotor 1 in the form of its basic embodiment with compressor wheel 2, which sucks in a gas/air mixture through the opening 3. The compression passage 2, in which the pressure of the gas is increased by the centrifugal acceleration acting on the gas stream, is fixedly connected to the combustion space 4, which is designed as a single annular chamber. The initial ignition of the premixed gas/air mixture can be effected by ignition using a spark igniter (spark plug) 22, with the electrical energy being transferred from the casing 23 (also by means of a spark) to the spark plug. The combustion space 4 is also fixedly connected to the expansion wheel 5, in which the hot gases flow out through a jet nozzle 6, imparting a predominantly tangential velocity to the gas jet which flows out. The outgoing flow may be purely tangential (at the rotor circumference) or may include an axial component in the direction of the compressor (as shown) or away from the rotor, or a combination of the above directions.

On account of the fact that the gases flow out with a higher velocity and/or a larger radius with respect to the gases which are sucked in, a net torque is exerted on the rotor 1, which can be used, via an output shaft, to drive a device, for example an electricity generator with a power of, for example, between 10 W and 150 KW. Since the absolute velocity of the medium flowing out represents a loss of kinetic energy, it should be kept as low as possible. With a view to maintaining the angular momentum, this means that a low mechanical torque will be exerted on the rotor. This means that a required mechanical power preferably has to be developed with a low mechanical torque and a high rotor speed. A rotational speed of more than 50 000 revolutions per minute is provided.

For applications in which a single-stage compressor wheel is insufficient with regard to the increase in pressure, Figure 2 shows an embodiment with a multistage compressor wheel (in this case a two-stage compressor wheel). In this embodiment of the compressor, after each (centrifugal) compression stage (passage 2), the gas is fed to a momentum regeneration stage 9. The gas (which has a higher tangential velocity component than that of the compressor wheel 2) in this case, as a result of friction in the boundary layers at the disks, transmits tangential momentum to the rotor, with the result that mechanical energy is delivered. Positioning various stages in series results in the static increase in pressure being stacked up, with the result that the pressure ratio increases without the need for an extremely high rotational speed and/or rotor dimension. A particular characteristic of the disk compressor is that the kinetic energy of the gas, after each compression stage, is largely converted into mechanical energy (in the boundary layers at the disks), and is thereby recovered.

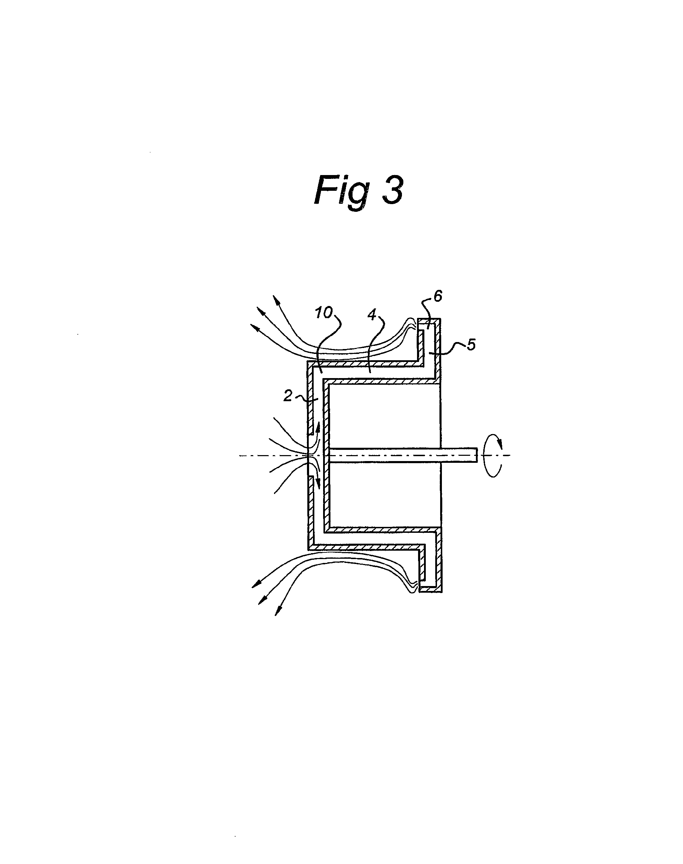

Figure 3 shows the basic embodiment of the turbine, in which the thermal energy which is still present in the outlet gases is used to preheat the compressed gas/air mixture in a regeneration space 10. The regeneration space 10 is connected upstream of and fixedly connected to the combustion space 4. Regeneration of residual heat results in a higher thermodynamic efficiency of the turbine.

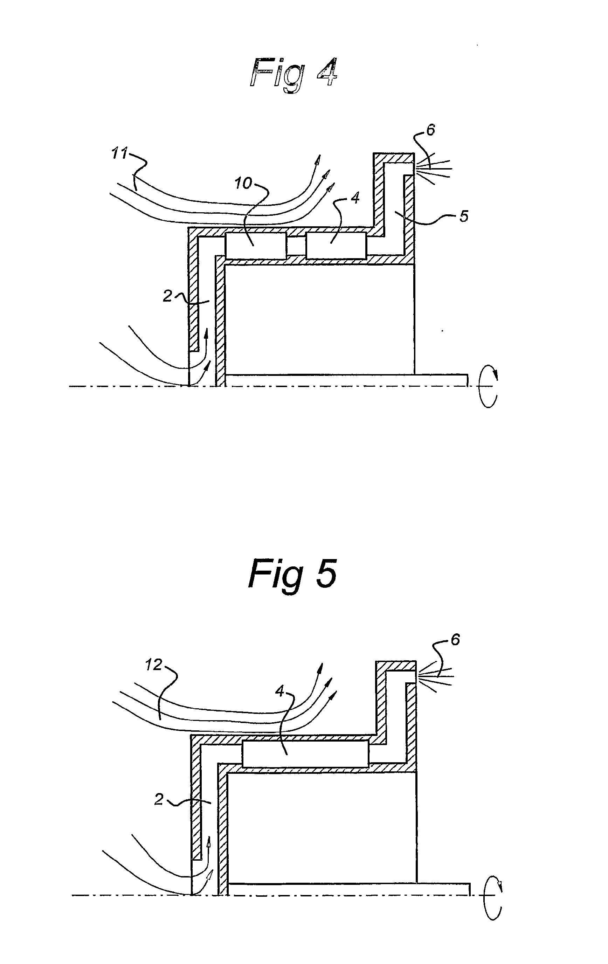

Figure 4 shows an embodiment of the basic configuration in which the compressed gas/air mixture is cooled by a cooling stream 11. Cooling makes it possible to obtain a higher final compression pressure without this being associated with undesirable autoignition of the working medium. If the medium is recooled not after but rather during compression in passage 2, an isothermal compression process is approached, which is likewise advantageous for the efficiency of the system. It is known from the field of thermodynamics that a gas turbine cycle with regeneration and isothermal compression and expansion is close to the ideal Carnot cycle.

As shown in Figure 5, the compressed gas/air mixture can also be preheated by means of an external heat source 12, which emits heat via the rotor wall to the air in the heating passage 4. External combustion (outside the rotor) gives the advantages that combustion can be better controlled (ignited) and is more stable. Moreover, external combustion is easier to realize, on account of the greater degrees of freedom (in geometry).

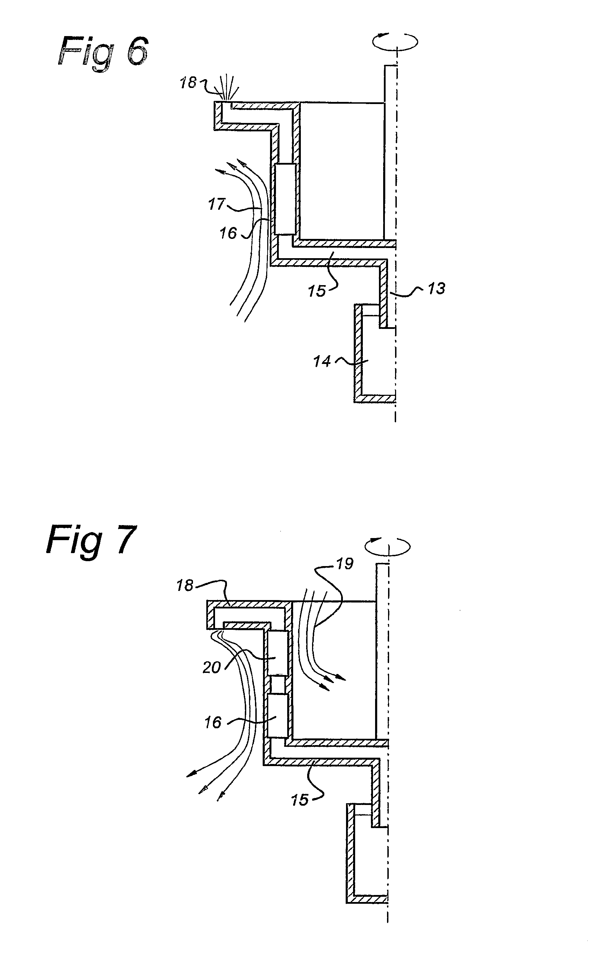

An embodiment with an external heat source working on the basis of a Rankine steam cycle is illustrated in Figure 6. This embodiment works on the basis of an evaporating liquid. The liquid is sucked out of a liquid feed pipe 14 through a suction pipe 13 and compressed to an elevated pressure in the pump impeller 15. Positioning the axis of rotation vertically means that there is no need for a rotary seal between the rotor and the liquid feed pipe. In the evaporation space 16 which is fixedly connected to the pump passage 15, the liquid is evaporated under the influence of heat which is supplied by an external heat flux 17. The vapor which is formed is expanded into the surroundings in the jet nozzles 18, in this way transmitting its momentum to the rotor. The advantage of the Rankine cycle is the higher power factor (less compression work required in relation to the expansion work).

Finally, Figure 7 shows an embodiment in which the residual heat of the vapor after expansion is reused (regenerated) to preheat liquid prior to thermal energy being supplied by means of the external heat source 19, which in this case is positioned on the hollow rotor wall. As is the case with the gas turbine, the energy efficiency of the system increases as a result of regeneration.

## Claims

1. Reaction turbine (1), comprising a rotatably mounted turbine wheel, said turbine wheel comprising an inlet (3) arranged in the vicinity of its center axis and an outlet (6) arranged in the vicinity of the outer circumference, with a compressor having a compression passage and a combustion chamber (4) being arranged between the said outlet and inlet, said combustion chamber and compressor being completely delimited within the said turbine wheel, said compressor being fixedly connected to said combustion chamber (4), **characterized in that** said combustion chamber comprises a single open annular chamber and said compressor is a centrifugal compressor and said compression passage has an unbladed transition to said combustion chamber.

2. Reaction turbine as claimed in claim 1, wherein said compressor comprises a multistage compressor, each compression space comprising an inlet arranged in the vicinity of the center axis and an outlet arranged in the vicinity of the outer circumference of the turbine wheel, and wherein there is a connecting conduit between the outlet of the first compressor stage and the inlet of the second compressor stage.

3. Reaction turbine as claimed in claim 2, wherein the said connecting conduit is delimited by a wall of the space of the first compressor stage and a wall of the space of the second compressor stage.

4. Reaction turbine as claimed in claim 2 or 3, wherein the said wall comprises a friction disk.

5. Reaction turbine as claimed in one of the preceding claims, wherein the external diameter of the turbine wheel is less than 200 mm.

6. Reaction turbine as claimed in one of the preceding claims, comprising heat exchanger means for heating the gas coming out of the compressor.

7. Reaction turbine as claimed in claim 6, wherein the heat exchanger surface of the heat exchanger means delimits on the one hand the outlet of the outlet passage of the said turbine wheel and on the other hand the connection between compressor and combustion space.

8. Reaction turbine as claimed in one of the preceding claims, comprising heat exchanger means for cooling the gas which is fed to the compressor and/or is compressed.

9. Combined heat and power system, comprising a reaction turbine as claimed in one of the preceding claims and an electric generator.

10. Combined heat and power system as claimed in claim 9, in which there are heat exchanger means connected to a heating system for buildings.

11. Method for driving a turbine wheel of a reaction turbine in rotation around an axis of rotation, comprising the steps of introducing a gas via the inlet near the axis of rotation thereof, compressing the gas in a compressing passage, reacting said gas in a combustion chamber arranged between said inlet and an outlet to form combustion gas, discharging said combustion gas via said outlet, wherein said combustion and compression are completely delimited within said turbine wheel, **characterised in that** combustion takes place at just one location in the said turbine wheel, and the gas comprises an gas/air mixture having a slight excess of air.

12. Method as claimed in claim 11 wherein the said compression step is carried out in at least two stages, with a transportation stage being present between these stages, the kinetic energy of the medium from the first compression stage being converted into mechanical energy in said intermediate stage, with the static pressure of the medium being retained.

13. Method as claimed in claim 12, in which during the said transportation stage the said gas is passed along a friction surface.

14. Method as claimed in one of claims 11-13, in which the said gas/working medium consists of a premixed gas/air mixture.

15. Method as claimed in one of claims 11-13, in which said gas/working medium consists of a two-phase medium which is pressurized as a liquid and is converted into vapor by the supply of thermal energy, leaving the outlet as expanded vapor.

## Patentansprüche

1. Reaktionsturbine (1), bestehend aus einem drehbar gelagerten Turbinenrad, welches einen in der Nähe seiner Achse angebrachten Einlass (3) und einen in der Nähe seines äußeren Umfangs angebrachten Auslass (6) umfasst, wobei zwischen dem genannten Auslass und Einlass ein Kompressor mit einem Kompressionskanal und einer Brennkammer (4) angeordnet sind und wobei die Brennkammer und der Kompressor vollständig von dem Turbinenrad umgrenzt sind und der Kompressor fest mit der Brennkammer (4) verbunden ist, **dadurch gekennzeichnet, dass** die Brennkammer eine offene, ringförmige Kammer umfasst, dass es sich bei dem Kompressor um einen Zentrifugalkompressor handelt und dass der Kompressionskanal einen nicht mit Schaufeln besetzten Übergang zur Brennkammer besitzt.

2. Reaktionsturbine nach Anspruch 1, wobei der genannte Kompressor einen Mehrstufenkompressor umfasst, wobei jede Kompressionskammer einen in der Nähe der Achse angebrachten Einlass und einen in der Nähe des äußeren Umfangs des Turbinenrades angebrachten Auslass umfasst und wobei zwischen dem Auslass der ersten Kompressorstufe und dem Einlass der zweiten Kompressorstufe eine Verbindungsleitung angeordnet ist.

3. Reaktionsturbine nach Anspruch 2, wobei die genannte Verbindungsleitung von einer Wand der Kammer der ersten Kompressorstufe und einer Wand der Kammer der zweiten Kompressorstufe begrenzt wird.

4. Reaktionsturbine nach Anspruch 2 oder 3, wobei die genannte Wand eine Reibscheibe umfasst.

5. Reaktionsturbine nach einem der vorangegangenen Ansprüche, wobei der Außendurchmesser des Turbinenrades weniger als 200 Millimeter beträgt.

6. Reaktionsturbine nach einem der vorangegangenen Ansprüche, die Wärmeaustauschmittel für die Erwärmung des aus dem Kompressor austretenden Gases umfasst.

7. Reaktionsturbine nach Anspruch 6, wobei die Wärmeaustauschfläche der genannten Wärmeaustauschmittel einerseits den Auslass des Auslasskanals des genannten Turbinenrades und andererseits die Verbindung zwischen dem Kompressor und der Brennkammer begrenzt.

8. Reaktionsturbine nach einem der vorangegangenen Ansprüche, die Wärmeaustauschmittel für die Kühlung des dem Kompressor zugeführten und/oder verdichteten Gases umfasst.

9. Kraft-Wärme-System, das eine Reaktionsturbine nach einem der vorangegangenen Ansprüche sowie einen Stromgenerator umfasst.

10. Kraft-Wärme-System nach Anspruch 9, wobei Wärmeaustauschmittel vorhanden und mit einem Gebäudeheizsystem verbunden sind.

11. Arbeitsverfahren für den rotierenden Antrieb eines Turbinenrades einer Reaktionsturbine um eine Drehachse, bestehend aus den Schritten der Zuführung eines Gases durch den in der Nähe der Drehachse des Turbinenrades angeordneten Einlass, der Verdichtung des Gases in einem Kompressionskanal, der Reaktion des Gases in einer zwischen dem Einlass und dem Auslass angeordneten Brennkammer zu einem Verbrennungsgas sowie dem Ausstoß des Verbrennungsgases durch den Auslass, wobei die Verbrennung und Verdichtung vollständig innerhalb der Grenzen des Turbinenrades erfolgen, **dadurch gekennzeichnet, dass** nur an einer Stelle innerhalb des Turbinenrades eine Verbrennung stattfindet und es sich bei dem Gas um ein Gas-Luft-Gemisch handelt, das einen geringen Überschuss an Luft enthält.

12. Arbeitsverfahren nach Anspruch 11, wobei die Verdichtung in mindestens zwei Stufen stattfindet, wobei zwischen diesen Stufen eine Transportstufe angeordnet ist und wobei die kinetische Energie des aus der ersten Kompressionsstufe austretenden Mediums in dieser Zwischenstufe in mechanische Arbeit umgesetzt wird, wobei sich der statische Druck des Mediums nicht verändert.

13. Arbeitsverfahren nach Anspruch 12, wobei das genannte Gas während der erwähnten Transportstufe an einer Reibungsfläche vorbeigeführt wird.

14. Arbeitsverfahren nach einem der Ansprüche 11 bis 13, wobei das genannte Gas-Arbeits-Medium aus einem vorgemischten Gas-Luft-Gemisch besteht.

15. Arbeitsverfahren nach einem der Ansprüche 11 bis 13, wobei das genannte Gas-Arbeits-Medium aus einem Zweiphasenmedium besteht, das als Flüssigkeit mit Druck beaufschlagt wird, durch die Zuführung thermischer Energie in die dampfförmige Phase übergeht und als entspannter Dampf durch den Auslass entweicht.

## Revendications

1. Turbine à réaction (1) dans laquelle est installée une roue de turbine pouvant pivoter, laquelle roue de turbine comprend une admission (3) fixée près de sa ligne médiane et une évacuation (6) fixée près du périmètre externe, où un compresseur ayant un couloir de compression ainsi qu'une chambre de combustion (4) est fixé entre cette admission et cette évacuation, lesquels chambre de combustion et compresseur sont situés entièrement à l'intérieur des limites de la roue de turbine, lequel compresseur est solidement relié à la chambre de combustion (4), **caractérisée en ce que** la chambre de combustion comprend une chambre ouverte en forme d'anneau et **en ce que** le compresseur est un compresseur centrifuge et le couloir de compression a un passage vers la chambre de combustion n'étant pas pourvu de pales.

2. Turbine à réaction selon la revendication 1, où ce compresseur comprend un compresseur multi-étages, où chaque chambre de compression comprend une admission fixée près de la ligne médiane et une évacuation fixée près du périmètre externe de la roue de turbine et où une conduite de raccordement est installée entre l'évacuation du premier étage de compresseur et l'admission du deuxième étage de compresseur.

3. Turbine à réaction selon la revendication 2, où cette conduite de raccordement est délimitée par une paroi de la chambre du premier étage de compresseur et une paroi de la chambre du deuxième étage de compresseur.

4. Turbine à réaction selon la revendication 2 ou 3, où cette paroi comprend un disque de friction.

5. Turbine à réaction selon une des revendications précédentes, où le diamètre extérieur de la roue de turbine est inférieur à 200 mm.

6. Turbine à réaction selon une des revendications précédentes, comprenant des outils d'échange de chaleur pour réchauffer le gaz provenant du compresseur.

7. Turbine à réaction selon la revendication 6, où la surface d'échange de chaleur de ces outils d'échange de chaleur délimite d'une part le trou d'évacuation du canal d'évacuation de la roue de turbine et d'autre part le raccordement entre le compresseur et la chambre de combustion.

8. Turbine à réaction selon une des revendications précédentes, comprenant des outils d'échange de chaleur pour refroidir le gaz qui est apporté au compresseur et/ou comprimé.

9. Système à cogénération comprenant une turbine à réaction selon une des revendications précédentes et un générateur électrique.

10. Système à cogénération selon la revendication 9, où des outils d'échange de chaleur sont installés, reliés à un système de chauffage pour des bâtiments.

11. Mode d'emploi pour l'entraînement rotatif, autour d'un axe de rotation, d'une roue de turbine d'une turbine à réaction, comprenant les étapes de l'apport d'un gaz via l'admission située près de l'axe de rotation de celle-ci, de la compression du gaz dans un couloir de compression, de la réaction du gaz pour se transformer en gaz de combustion dans une chambre de combustion se trouvant entre l'admission et l'évacuation, de l'écoulement du gaz de combustion via l'évacuation, où la combustion et la compression ont lieu entièrement à l'intérieur des limites de la roue de turbine, **caractérisé en ce que** la combustion a lieu en un seul endroit dans la roue de turbine, et **en ce que** le gaz comprend un mélange gaz/air contenant un faible excès d'air.

12. Mode d'emploi selon la revendication 11, où cette compression est réalisée dans au moins deux étages, où un étage de transport se trouve entre ces étages, où l'énergie cinétique du médium provenant du premier étage de compression est convertie en énergie mécanique dans cet étage intermédiaire où la pression statique du médium est conservée.

13. Mode d'emploi selon la revendication 12, où pendant cet étage de transport, ce gaz est dirigé le long d'une surface de frottement.

14. Mode d'emploi selon une des revendications 11-13, où ce médium de gaz/travail se compose d'un mélange gaz/air pré-mélangé.

15. Mode d'emploi selon une des revendications 11-13, où ce médium de gaz/travail se compose d'un médium diphasique qui est mis sous pression sous forme liquide et se transforme en vapeur par l'apport d'énergie thermique et sort de l'évacuation sous forme de vapeur dilatée.
